# FASCICULE DE BREVET EUROPEEN

(11) **EP 2 854 259 B1**
(45) Date de publication et mention de la délivrance du brevet: **12.08.2020**
(21) Numéro de dépôt: 14185823.3
(22) Date de dépôt: 22.09.2014
(51) Int. Cl.: H02K 1/32, H02K 9/06, H02K 1/27

(54) **Rotor de machine électrique avec au moins une ailette de création d'un flux d'air à l'intérieur de l'arbre et machine électrique comportant un tel rotor**
Rotor einer elektrischen Maschine mit mindestens einem Flügel zum Erzeugen eines Luftstroms in der Welle und elektrische Maschine, die einen solchen Rotor umfasst
Rotor of an electric machine with at least one fin for creating an air flow inside the shaft and electric machine comprising such a rotor

(30) Priorité: 25.09.2013 FR 1359202
(43) Date de publication de la demande: 01.04.2015
(73) Titulaire: ALSTOM Transport Technologies, 93400 Saint-Ouen (FR)
(72) Inventeur: Periot, Robert, 64460 LAMAYOU (FR); Fellmann, Daniel, 65420 IBOS (FR)
(74) Mandataire: Lavoix

(56) Documents cités:
- JP-U- H0 562 176
- US-A1- 2003 146 667
- US-A1- 2008 265 699

## Description

La présente invention concerne un arbre d'un rotor de machine électrique. Le rotor comporte une masse magnétique destinée à être fixée à l'arbre. L'arbre est mobile en rotation autour d'un axe longitudinal et comprend un corps s'étendant suivant l'axe longitudinal, le corps comportant un évidement de passage de l'air, un orifice d'entrée d'air depuis l'extérieur de l'arbre vers l'évidement, et un orifice de sortie d'air depuis l'évidement vers l'extérieur de l'arbre, l'évidement s'étendant longitudinalement sur au moins une partie de la longueur du corps suivant l'axe longitudinal.

L'invention concerne également un rotor de machine électrique comprenant un tel arbre mobile en rotation autour de l'axe longitudinal et une masse magnétique fixée à l'arbre.

L'invention concerne également une machine électrique comprenant une carcasse, un stator disposé à l'intérieur de la carcasse et un tel rotor.

On connait du document WO 2011/110558 A1 une machine électrique comprenant une carcasse, un stator disposé à l'intérieur de la carcasse et un rotor, le rotor comportant un arbre du type précité, mobile en rotation autour d'un axe longitudinal, et une masse magnétique fixée à l'arbre.

L'arbre est creux, et comporte un passage interne de circulation d'un flux d'air de refroidissement. L'arbre comprend, en l'une de ses extrémités, un orifice longitudinal d'entrée d'air, et une pluralité d'orifices radiaux de sortie d'air disposés au voisinage de l'autre de ses extrémités. Lors du fonctionnement de la machine électrique, le rotor est entraîné en rotation par le stator. L'arbre, solidaire du rotor, est également entraîné en rotation, et de l'air est alors aspiré depuis l'orifice d'entrée jusqu'aux orifices radiaux de sortie, à travers le passage interne, de par la force centrifuge appliquée aux orifices radiaux. Les documents US2008/0265699 A1, US2003/0146667 A1 et JPH0562176U sont aussi état de la technique.

Toutefois, la circulation du flux d'air à l'intérieur du passage interne n'est pas optimale, ce qui est susceptible d'engendrer un échauffement du rotor.

Le but de l'invention est donc de proposer un arbre de rotor de machine électrique permettant d'améliorer la circulation du flux d'air, afin de mieux refroidir le rotor.

A cet effet, l'invention a pour objet un rotor de machine électrique comme défini dans la revendication 1. Des modes de réalisation avantageux sont définis dans les revendications dépendantes 2 à 7.

L'invention a également pour objet une machine électrique comme définie dans les revendications dépendantes 8 à 10.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique de la machine électrique selon un premier exemple utile à la compréhension de l'invention,
- les figures 2 et 3 sont des vues analogues à celle de la figure 1 selon des première et deuxième variantes du premier exemple utile à la compréhension de l'invention,
- la figure 4 est une vue analogue à celle de la figure 1 selon un deuxième mode de réalisation,
- la figure 5 est une vue analogue à celle de la figure 3 selon le deuxième mode de réalisation,
- la figure 6 est une vue analogue à celle de la figure 1 selon un troisième mode de réalisation, et
- la figure 7 est une vue analogue à celle de la figure 3 selon le troisième mode de réalisation.

Dans la suite de la description, l'expression « sensiblement égal à » s'entend comme une relation d'égalité à plus ou moins 5%.

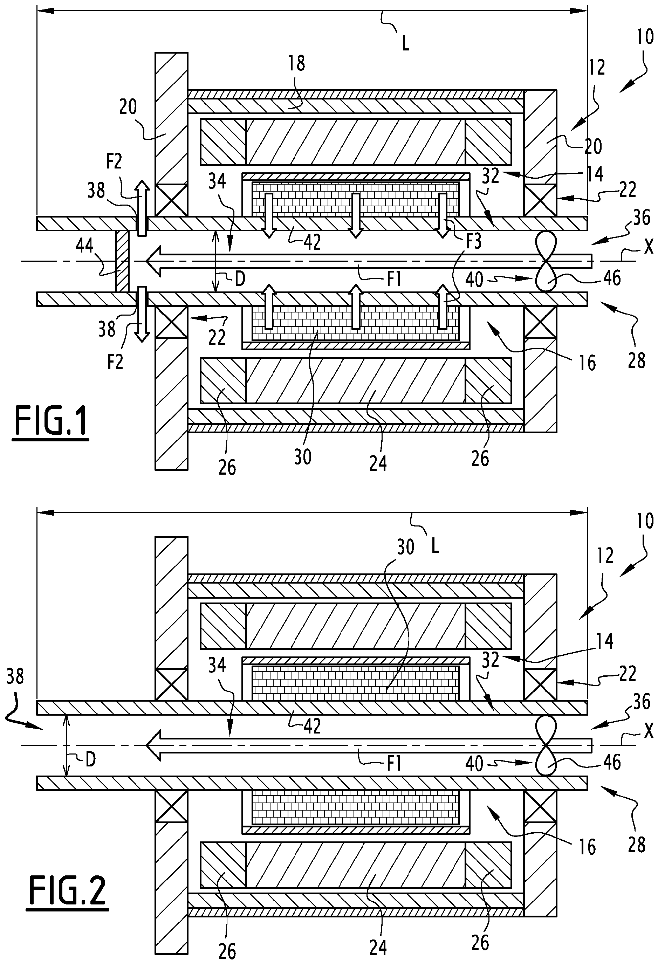

Sur la figure 1, une machine électrique 10 comprend une carcasse 12, un stator 14 disposé à l'intérieur de la carcasse 12 et un rotor 16 mobile en rotation autour d'un axe longitudinal X.

La machine électrique 10 est, par exemple, une machine asynchrone. En variante, la machine électrique 10 est une machine synchrone.

La machine électrique 10 est de préférence une machine à grande vitesse, le rotor 16 présentant une vitesse de rotation maximale, autour de l'axe longitudinal X, de valeur supérieure à 10 000 tours par minute, de préférence supérieure à 15 000 tours par minute, de préférence encore supérieure à 20 000 tours par minute, de préférence encore sensiblement égale à 28 000 tours par minute.

La carcasse 12 comporte une paroi latérale 18 et deux parois d'extrémité 20 fixées de part et d'autre de la paroi latérale 18 suivant l'axe longitudinal X. La carcasse 12 comporte également deux paliers 22 de maintien du rotor 16, chacun étant solidaire d'une paroi d'extrémité 20 respective.

La carcasse 12 est, par exemple, cylindrique, et la paroi latérale 18 est alors en forme d'un cylindre, les deux parois d'extrémité 20 étant chacune de préférence en forme de disque.

Le stator 14 est connu en soi, et comporte un noyau 24 et des enroulements 26 dont les extrémités, également appelées têtes de bobine, sont en saillie de part et d'autre du noyau 24 suivant l'axe longitudinal X.

Le rotor 16 comprend un arbre 28 mobile en rotation autour de l'axe longitudinal X et une masse magnétique 30 fixée à l'arbre 28, la masse magnétique 30 étant disposée à l'intérieur de la carcasse 12.

Les paliers 22 sont propres à soutenir le rotor 16 en rotation autour de l'axe longitudinal X. Plus précisément, les paliers 22 sont propres à soutenir l'arbre 28 du rotor. Les paliers 22 sont, par exemple, des paliers magnétiques.

L'arbre 28 est mobile en rotation autour de l'axe longitudinal X de par les paliers 22 assurant un maintien radial de l'arbre tout en autorisant une rotation de ce dernier autour de l'axe longitudinal X. L'arbre 28 est porté par les paliers 22. L'arbre 28 étant solidaire de la masse magnétique 30, la vitesse de rotation de l'arbre 28 autour de l'axe longitudinal X est égale à la vitesse de rotation du rotor 16.

L'arbre 28 comprend un corps 32 de longueur L s'étendant suivant l'axe longitudinal X, le corps 32 comportant un évidement 34 de passage de l'air, au moins un orifice 36 d'entrée d'air depuis l'extérieur de l'arbre 28 vers l'évidement 34 et au moins un orifice 38 de sortie d'air depuis l'évidement 34 vers l'extérieur de l'arbre 28, l'évidement 34 de passage de l'air s'étendant longitudinalement sur au moins une partie de la longueur L, suivant l'axe longitudinal X, du corps 32. Autrement dit, l'arbre 28 est un arbre creux sur au moins une partie de sa longueur suivant l'axe longitudinal X.

L'arbre 28 est par exemple cylindrique, et le corps 32 est alors en forme d'un cylindre de révolution autour de l'axe longitudinal X.

Selon l'invention, l'arbre 28 comprend en outre au moins une ailette 40 s'étendant à l'intérieur de l'évidement 34, pour créer, lors de la rotation de l'arbre 28, un flux d'air circulant dans l'évidement 34 de passage de l'air depuis l'orifice 36 d'entrée d'air vers l'orifice 38 de sortie d'air.

La masse magnétique 30 comporte, par exemple, des aimants permanents.

Le corps 32 comporte une paroi latérale 42, de préférence cylindrique. Dans l'exemple de réalisation de la figure 1, le corps 32 comporte en outre une paroi d'extrémité 44.

Dans l'exemple de réalisation de la figure 1, le corps 32 comporte un seul orifice d'entrée 36, l'orifice d'entrée 36 étant un orifice longitudinal situé en l'une des extrémités du corps 32 suivant l'axe longitudinal X, et une pluralité d'orifices de sortie 38, les orifices de sortie 38 étant des orifices radiaux, s'étendant perpendiculairement à l'axe longitudinal X.

L'évidement 34 de passage de l'air présente, selon un axe radial perpendiculaire à l'axe longitudinal X, un diamètre D. Autrement dit, le diamètre D correspond au diamètre intérieur de l'arbre 28 dans la partie où l'arbre 28 est en forme d'un arbre creux.

Le ou les orifices d'entrée 36 et le ou les orifices de sortie 38 communiquent avec l'évidement 34 de passage de l'air pour permettre la circulation de l'air à l'intérieur de l'évidement de passage.

Dans l'exemple utile à la compréhension de l'invention de la figure 1, chaque orifice 36, 38 débouche à l'extérieur de la carcasse 12. L'orifice longitudinal d'entrée 36 est disposé en l'une des extrémités du corps 32, celle-ci dépassant de la carcasse 12 afin d'être maintenue par les paliers 22. Les orifices radiaux de sortie 38 sont disposés au voisinage de l'autre extrémité du corps 32, et à l'extérieur de la carcasse 12.

La ou chaque ailette 40 s'étend de préférence radialement à l'intérieur de l'évidement 34. La ou chaque ailette 40 s'étend, selon un axe radial perpendiculaire à l'axe longitudinal, de préférence sur au moins la moitié du diamètre D de l'évidement 34 de passage de l'air.

Dans l'exemple utile à la compréhension de l'invention décrit, en regard des figures 1 à 3, la ou chaque ailette 40 est en forme d'une pâle 46, et s'étend, selon l'axe radial perpendiculaire à l'axe longitudinal, sur sensiblement tout le diamètre D de l'évidement 34 de passage de l'air.

La ou chaque ailette 40 est de préférence solidaire du corps 32 de l'arbre.

En variante, la ou chaque ailette 40 est mobile en rotation par rapport au corps 32 de l'arbre, et la vitesse de rotation de la ou chaque ailette 40 par rapport au corps 32 est faible en comparaison avec la vitesse de rotation de la ou chaque ailette 40 par rapport à l'axe longitudinal X, afin de créer lors de la rotation de l'arbre 28 le flux d'air dans l'évidement 34 de passage de l'air, le ratio entre les deux vitesses étant par exemple inférieur à un dixième.

La ou chaque pale 46 forme, avec un plan perpendiculaire à l'axe longitudinal X, un angle de valeur comprise entre 0° et 90°, de préférence sensiblement égal à 10°.

La forme des pales est déterminée de manière à constituer une hélice élémentaire, la forme de chaque pale pouvant être limitée à une simple plaque plane.

En cas de besoin, la forme peut être plus élaborée et se rapprocher de ce qui est utilisé en ventilation industrielle par exemple.

Dans l'exemple présenté ici, le nombre de pales est de deux, mais des hélices à plus grand nombre de pales peuvent être utilisées.

Ainsi, lors du fonctionnement de la machine électrique 10, la masse magnétique 30 du rotor est entraînée en rotation autour de l'axe longitudinal X sous l'action du champ magnétique exercé par le stator 14. L'arbre 28, solidaire de la masse magnétique 30, est alors entraîné en rotation autour de l'axe longitudinal X, et la ou les ailettes 40 s'étendant à l'intérieur de l'évidement 34 sont également entraînées en rotation autour de l'axe longitudinal X. La ou les ailettes 40, par exemple en forme de pâles 46, forment alors une turbine aspirant l'air depuis l'orifice d'entrée 36 (flèche F1) jusqu'à le ou les orifices de sortie 38 (flèches F2) à travers l'évidement 34 de passage de l'air.

Le flux d'air circulant à l'intérieur de l'évidement 34 de passage de l'air permet alors d'améliorer l'évacuation des calories dissipées par la masse magnétique 30 (flèches F3).

L'air circulant dans l'évidement 34 de passage de l'air provient de l'extérieur de la carcasse 12 et est rejeté à l'extérieur de la carcasse 12 après être passé dans l'évidement 34, les orifices d'entrée et de sortie 36, 38 étant disposés à l'extérieur de la carcasse 12. La circulation d'air dans l'évidement 34 de passage de l'air est alors une circulation en circuit ouvert.

On conçoit ainsi que l'arbre 28 permet d'améliorer la circulation du flux d'air à l'intérieur de l'évidement 34 de passage de l'air de par la présence de la ou des ailettes 40 formant moyens d'aspiration de l'air lors du fonctionnement de la machine électrique 10.

L'homme du métier comprendra bien entendu que le sens de circulation de l'air du flux d'air à l'intérieur de l'évidement 34 de passage de l'air dépend du sens de rotation du rotor 16 autour de l'axe longitudinal X. Si le sens de rotation du rotor 16 est inversé, alors le ou les orifices d'entrée 36 deviennent le ou les orifices de sortie 38, et inversement le ou les offices de sortie 38 deviennent le ou les orifices d'entrée 36, le sens des flèches F1, F2 est également inversé.

La figure 2 illustre une première variante du premier exemple utile à la compréhension de l'invention pour laquelle les éléments identiques au premier exemple, décrit précédemment en regard de la figure 1, sont repérés par des références identiques et ne sont pas décrits à nouveau.

Selon cette première variante du premier mode de réalisation, le corps 32 comporte un seul orifice de sortie 38, l'orifice de sortie 38 étant un orifice longitudinal disposé en l'autre extrémité du corps 32 suivant l'axe longitudinal X par rapport à l'orifice d'entrée 36. Autrement dit, selon cette première variante, le corps 32 comporte un seul orifice d'entrée 36 et un seul orifice de sortie 38, les orifices d'entrée 36 et de sortie 38 étant disposés aux deux extrémités du corps 32.

Selon cette première variante, le corps 32 comporte la paroi latérale 42, de préférence cylindrique, et ne comporte pas de paroi d'extrémité. Autrement dit, l'arbre 28 est un arbre creux sur toute sa longueur suivant l'axe longitudinal X. L'évidement 34 de passage de l'air s'étend sur toute la longueur L du corps 32.

Le fonctionnement de l'arbre 28 et de la machine électrique 10 selon cette première variante est analogue à celui décrit précédemment en regard de la figure 1, à la différence que l'air circule uniquement suivant l'axe longitudinal X (flèche F1) à l'intérieur de l'évidement 34 de passage de l'air depuis l'orifice d'entrée 36 jusqu'à l'orifice de sortie 38.

L'arbre 28 selon cette première variante permet d'améliorer encore la circulation du flux d'air à l'intérieur de l'évidement 34 de passage de l'air puisque le flux d'air n'est pas dévié à l'intérieur de l'évidement 34 de passage de l'air, et l'orifice d'entrée 36 et l'orifice de sortie 38 présentent une section d'aire sensiblement égale.

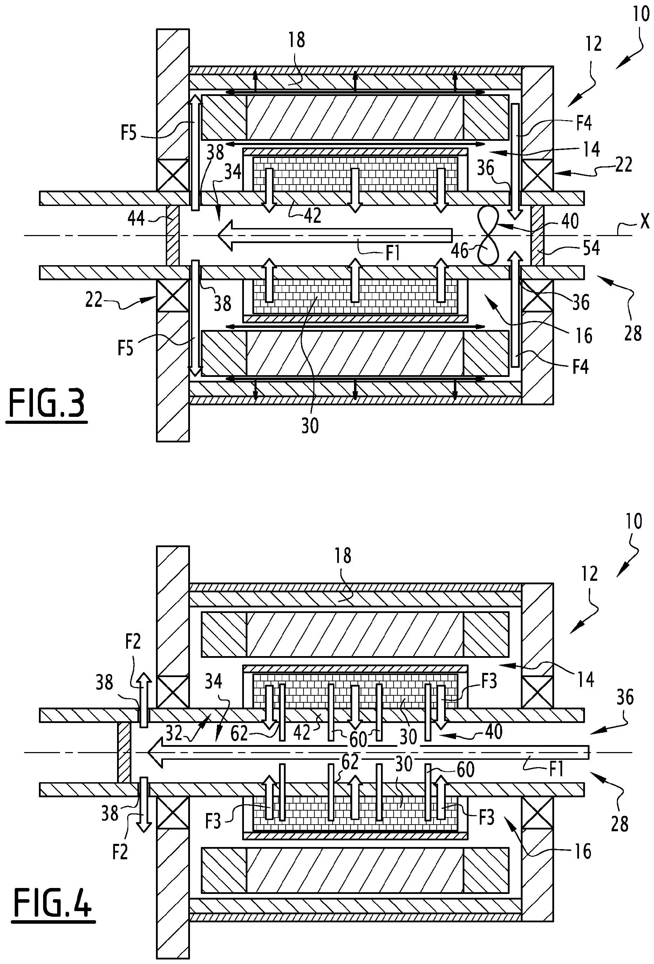

La figure 3 illustre une deuxième variante du premier exemple pour laquelle les éléments identiques au premier mode de réalisation, décrit précédemment en regard de la figure 1, sont repérés par des références identiques et ne sont pas décrits à nouveau.

Selon cette deuxième variante du premier mode de réalisation, le corps 32 comporte en outre une deuxième paroi d'extrémité 54. Autrement dit, le corps 32 comporte deux parois d'extrémités 44, 54. Les deux parois d'extrémité 44, 54 sont de préférence situées chacune à proximité, selon l'axe longitudinal X, d'un palier 22 et d'une paroi latéral 18 respectifs.

Selon cette deuxième variante du premier mode de réalisation, chaque orifice 36, 38 débouche à l'intérieur de la carcasse 12. Le corps 32 comporte une pluralité d'orifices d'entrée 36, les orifices d'entrée 36 étant des orifices radiaux, s'étendant perpendiculairement à l'axe longitudinal X. Le corps 32 comporte une pluralité d'orifices de sortie 38, les orifices de sortie 38 étant des orifices radiaux, s'étendant perpendiculairement à l'axe longitudinal X. Les orifices d'entrée 36 sont disposés au voisinage d'un palier 22 à l'intérieur de la carcasse 12, et les orifices de sortie 38 sont disposés au voisinage de l'autre palier 22 à l'intérieur de la carcasse 12.

Le fonctionnement de l'arbre 28 et de la machine électrique 10 selon cette deuxième variante est analogue à celui décrit précédemment en regard de la figure 1, à la différence que l'air circulant dans l'évidement 34 de passage de l'air provient de l'intérieur de la carcasse 12 (flèche F4) et est rejeté à l'intérieur de la carcasse 12 (flèche F5) après être passé dans l'évidement 34, les orifices d'entrée et de sortie 36, 38 étant disposés à l'intérieur de la carcasse 12. La circulation d'air dans l'évidement 34 de passage de l'air est alors une circulation en circuit fermé. La température à l'intérieur de la carcasse 12 est plus homogène, et les calories issus de l'échauffement du rotor 16 sont évacuées par conduction au niveau de la carcasse 12 lorsque l'air issu des orifices de sortie 38 (flèche F5) circule entre le stator 14 et la carcasse 12.

La figure 4 illustre un deuxième mode de réalisation, qui est un mode de réalisation de l'invention revendiquée, pour lequel les éléments identiques au premier exemple, décrit précédemment, sont repérés par des références identiques et ne sont pas décrits à nouveau.

Selon ce deuxième mode de réalisation, la ou chaque ailette 40 est en forme d'un drain thermique 60 réalisé en un matériau thermiquement conducteur, tel qu'un métal comme le cuivre ou l'aluminium, une céramique à base d'alumine, de carbure de silicium, de silice ou un composé carboné.

Le corps 32 de l'arbre comporte au moins un trou traversant 62 entre la masse magnétique 30 et l'évidement 34 de passage de l'air, et le ou chaque drain thermique 60 est en contact avec la masse magnétique 30 et s'étend depuis la masque magnétique 30 jusqu'à l'intérieur de l'évidement 34 via un trou traversant 62 correspondant.

Le ou chaque drain thermique 60 s'étend de préférence radialement à l'intérieur de l'évidement 34. Le ou chaque drain thermique 60 s'étend, selon un axe radial perpendiculaire à l'axe longitudinal, de préférence sur au moins la moitié du diamètre D de l'évidement 34 de passage de l'air.

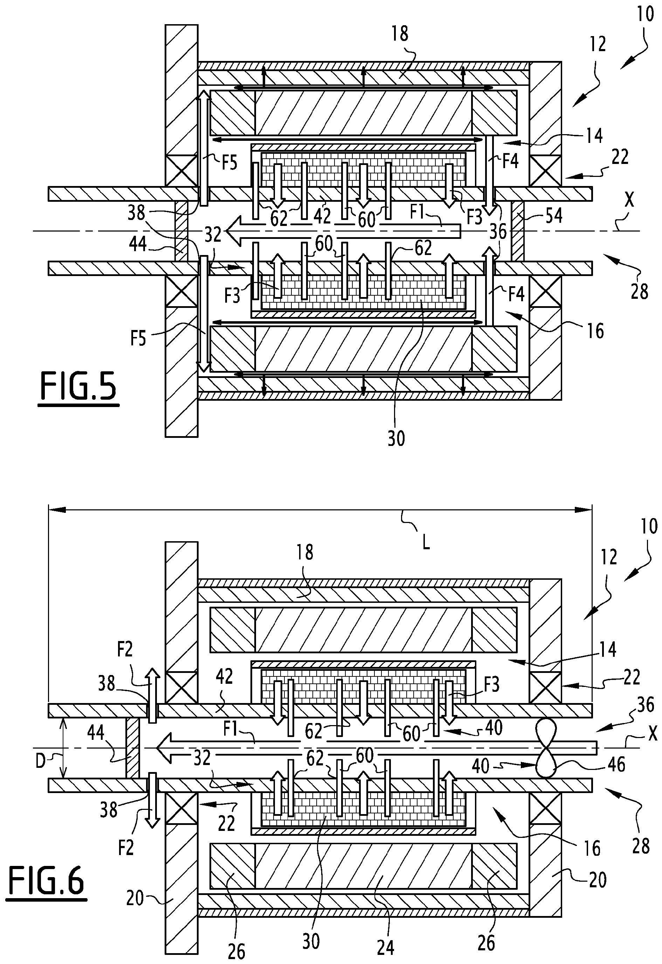

Dans le mode de réalisation décrit, en regard des figures 4 et 5, le ou chaque drain thermique 60 s'étend sur sensiblement deux tiers du diamètre D de l'évidement 34 de passage de l'air.

Le ou chaque drain thermique 60 est de préférence solidaire du corps 32 de l'arbre.

Les drains peuvent être de simples planes parallélépipédiques ou en forme de secteurs de disques. Ils présenteront par rapport au plan perpendiculaire à l'axe du rotor un angle similaire à celui des ailettes 40 de la fig. 3. Toutefois, si la matière le permet, des formes plus élaborées pourront être utilisées pour améliorer le rendement aérodynamique et l'échange thermique avec la masse magnétique.

Les orifices d'entrée 36 et de sortie 38 sont disposés de manière identique à ce qui a été décrit pour la figure 1, chaque orifice 36, 38 débouchant à l'extérieur de la carcasse 12. L'orifice longitudinal d'entrée 36 est disposé en l'une des extrémités du corps 32, et les orifices radiaux de sortie 38 sont disposés au voisinage de l'autre des extrémités du corps 32, et à l'extérieur de la carcasse 12.

Le fonctionnement de l'arbre 28 et de la machine électrique 10 selon cette deuxième variante est analogue à celui décrit précédemment en regard de la figure 1, à la différence que la ou les ailettes 40, formant moyens d'aspiration de l'air depuis l'orifice d'entrée 36 (flèche F1) jusqu'à l'orifice de sortie 38 (flèches F2) à travers l'évidement 34 de passage de l'air, sont en forme de drains thermiques 60.

Le flux d'air circulant à l'intérieur de l'évidement 34 de passage de l'air permet alors d'améliorer encore l'évacuation des calories dissipées par la masse magnétique 30 (flèches F3), les drains thermiques 60 permettant de mieux véhiculer les calories de la masse magnétique 30 vers l'évidement 34 tout en créant la circulation d'un flux d'air à l'intérieur de l'évidement 34 de passage de l'air.

La circulation d'air dans l'évidement 34 de passage de l'air est, de manière analogue à ce qui a été décrit pour la figure 1, une circulation en circuit ouvert.

La figure 5 illustre une variante de réalisation du deuxième mode de réalisation de l'invention revendiquée pour laquelle les éléments identiques au deuxième mode de réalisation, décrit précédemment en regard de la figure 4, sont repérés par des références identiques et ne sont pas décrits à nouveau.

Selon cette variante du deuxième mode de réalisation, le corps 32 comporte en outre la deuxième paroi d'extrémité 54. Autrement dit, le corps 32 comporte deux parois d'extrémités 44, 54, situées de préférence chacune à proximité, selon l'axe longitudinal X, d'un palier 22 et d'une paroi latéral 18 respectifs.

Selon cette variante du deuxième mode de réalisation, chaque orifice 36, 38 débouche à l'intérieur de la carcasse 12. Le corps 32 comporte une pluralité d'orifices d'entrée 36, les orifices d'entrée 36 étant des orifices radiaux, s'étendant perpendiculairement à l'axe longitudinal X. Le corps 32 comporte une pluralité d'orifices de sortie 38, les orifices de sortie 38 étant des orifices radiaux, s'étendant perpendiculairement à l'axe longitudinal X. Les orifices d'entrée 36 sont disposés au voisinage d'un palier 22 à l'intérieur de la carcasse 12, et les orifices de sortie 38 sont disposés au voisinage de l'autre palier 22 à l'intérieur de la carcasse 12.

Le fonctionnement de l'arbre 28 et de la machine électrique 10 selon cette variante est analogue à celui décrit précédemment en regard de la figure 4, à la différence que l'air circulant dans l'évidement 34 de passage de l'air provient de l'intérieur de la carcasse 12 (flèche F4) et est rejeté à l'intérieur de la carcasse 12 (flèche F5) après être passé dans l'évidement 34, les orifices d'entrée et de sortie 36, 38 étant disposés à l'intérieur de la carcasse 12. La circulation d'air dans l'évidement 34 de passage de l'air est alors une circulation en circuit fermé.

La figure 6 illustre un troisième mode de réalisation de l'invention revendiquée pour lequel les éléments identiques au premier exemple et au deuxième mode de réalisation, décrits précédemment, sont repérés par des références identiques et ne sont pas décrits à nouveau.

Le troisième mode de réalisation est la combinaison du premier exemple et du deuxième mode de réalisation, au moins une ailette 40 étant en forme de pâle 46 et d'autres ailettes étant en forme de drains thermiques 60.

Le fonctionnement de l'arbre 28 et de la machine électrique 10 selon ce troisième mode de réalisation est analogue à celui décrit précédemment en regard de la figure 1 ou de la figure 4, la circulation d'air dans l'évidement 34 de passage de l'air étant une circulation en circuit ouvert, avec les orifices d'entrée et de sortie 36, 38 débouchant à l'extérieur de la carcasse 12.

Les avantages de ce troisième mode de réalisation correspondent à la combinaison des avantages du premier exemple et du deuxième mode de réalisation. Le troisième mode de réalisation est le mode de réalisation préférentiel.

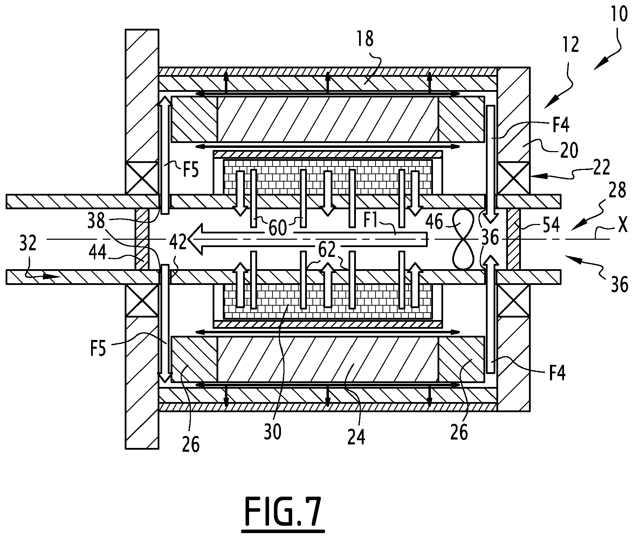

La figure 7 illustre une variante de réalisation du troisième mode de réalisation de l'invention revendiquée pour laquelle les éléments identiques au troisième mode de réalisation, décrit précédemment en regard de la figure 6, sont repérés par des références identiques et ne sont pas décrits à nouveau.

Selon cette variante du troisième mode de réalisation, le corps 32 comporte en outre la deuxième paroi d'extrémité 54, et chaque orifice 36, 38 débouche à l'intérieur de la carcasse 12. Le corps 32 comporte une pluralité d'orifices radiaux d'entrée 36 et une pluralité d'orifices radiaux de sortie 38. Les orifices d'entrée 36 sont disposés au voisinage d'un palier 22 à l'intérieur de la carcasse 12, et les orifices de sortie 38 sont disposés au voisinage de l'autre palier 22 à l'intérieur de la carcasse 12.

Le fonctionnement de l'arbre 28 et de la machine électrique 10 selon cette variante est analogue à celui décrit précédemment en regard de la figure 6, à la circulation d'air dans l'évidement 34 de passage de l'air est une circulation en circuit fermé.

On conçoit ainsi que l'arbre 28 selon l'invention permet d'améliorer la circulation du flux d'air à l'intérieur de l'évidement 34 de passage de l'air de par la présence de la ou des ailettes 40 formant moyens d'aspiration de l'air lors du fonctionnement de la machine électrique 10, afin de mieux refroidir la masse magnétique 30 du rotor 10.

## Revendications

1. Rotor (16) de machine électrique (10), comprenant un arbre (28) mobile en rotation autour d'un axe longitudinal (X) et une masse magnétique (30) fixée à l'arbre (28),
l'arbre (28) comprenant un corps (32) s'étendant suivant l'axe longitudinal (X), le corps (32) comportant un évidement (34) de passage de l'air, au moins un orifice (36) d'entrée d'air depuis l'extérieur de l'arbre (28) vers l'évidement (34), et au moins un orifice (38) de sortie d'air depuis l'évidement (34) vers l'extérieur de l'arbre (28), l'évidement (34) s'étendant longitudinalement sur au moins une partie de la longueur (L) du corps (32) suivant l'axe longitudinal (X),
l'arbre (28) comprenant en outre au moins une ailette (40, 60) s'étendant à l'intérieur de l'évidement (34), pour créer, lors de la rotation de l'arbre (28), un flux d'air circulant dans l'évidement (34) de passage de l'air depuis l'orifice (36) d'entrée d'air vers l'orifice (38) de sortie d'air,
**caractérisé en ce qu'**au moins une ailette (40, 60) est réalisée en un matériau thermiquement conducteur, le corps (32) de l'arbre comporte au moins un trou traversant (62) entre la masse magnétique (30) et l'évidement (34) de passage de l'air, et la ou chaque ailette thermiquement conductrice (40, 60) est en contact avec la masse magnétique (30) et s'étend depuis la masse magnétique (30) jusqu'à l'intérieur de l'évidement (34) via un trou traversant (62) correspondant.

2. Rotor (16) selon la revendication 1, dans lequel la ou chaque ailette (40, 60) s'étend radialement à l'intérieur de l'évidement (34).

3. Rotor (16) selon la revendication 1 ou 2, dans lequel au moins une ailette (40, 60) s'étend, selon un axe radial perpendiculaire à l'axe longitudinal, sur au moins la moitié d'un diamètre (D), selon ledit axe radial, de l'évidement (34) de passage de l'air de préférence sur sensiblement tout le diamètre (D) de l'évidement (34) de passage de l'air.

4. Rotor (16) selon l'une quelconque des revendications précédentes, dans lequel la ou chaque ailette (40, 60) est solidaire du corps (32) de l'arbre.

5. Rotor (16) selon l'une quelconque des revendications précédentes, dans lequel la ou chaque ailette (40, 60) forme, avec un plan perpendiculaire à l'axe longitudinal (X), un angle de valeur comprise entre 0 et 90°, de préférence sensiblement égal à 10°.

6. Rotor (16) selon l'une quelconque des revendications précédentes, dans lequel le matériau thermiquement conducteur est choisi parmi le groupe consistant en : un métal, tel que le cuivre ou l'aluminium, une céramique à base d'alumine, de carbure de silicium, de silice et un composé carboné.

7. Rotor (16) selon l'une quelconque des revendications précédentes, dans lequel le rotor (16) présente une vitesse de rotation maximale autour de l'axe longitudinal (X) de valeur supérieure à 10.000 tours par minute, de préférence supérieure à 15 000 tours par minute, de préférence encore supérieure à 20 000 tours par minute, de préférence encore sensiblement égale à 28 000 tours par minute.

8. Machine électrique (10), comprenant une carcasse (12), un stator (14) disposé à l'intérieur de la carcasse (12) et un rotor (16), **caractérisée en ce que** le rotor (16) est conforme à l'une quelconque des revendications précédentes, la masse magnétique (30) étant disposée à l'intérieur de la carcasse (12) et l'arbre (28) étant porté par deux paliers (22) solidaires de la carcasse (12).

9. Machine (10) selon la revendication 8, dans laquelle chaque orifice (36, 38) débouche à l'extérieur de la carcasse (12), chaque orifice (36, 38) étant un orifice radial ou un orifice longitudinal.

10. Machine (10) selon la revendication 9, dans laquelle chaque orifice (36, 38) débouche à l'intérieur de la carcasse (12), chaque orifice (36, 38) étant un orifice radial.

## Patentansprüche

1. Rotor (16) einer elektrischen Maschine (10), eine um eine Längsachse (X) drehbewegliche Welle (28) und eine an der Welle (28) befestigte Magnetmasse (30) umfassend, wobei
die Welle (28) einen Körper (32) umfasst, der sich gemäß der Längsachse (X) erstreckt, wobei der Körper (32) eine Ausnehmung (34) für den Durchgang der Luft, mindestens eine Lufteintrittsöffnung (36) von außerhalb der Welle (28) in die Ausnehmung (34) und mindestens eine Luftaustrittsöffnung (38) aus der Ausnehmung (34) nach außen in Bezug auf die Welle (28) umfasst, wobei sich die Ausnehmung (34) in Längsrichtung über mindestens einen Teil der Länge (L) des Körpers (32) gemäß der Längsachse (X) erstreckt,
die Welle (28) außerdem mindestens einen Flügel (40, 60) aufweist, der sich im Inneren der Ausnehmung (34) erstreckt, um bei der Drehung der Welle (28) einen in der Ausnehmung (34) für den Durchgang der Luft strömenden Luftstrom von der Lufteintrittsöffnung (36) zu der Luftaustrittsöffnung (38) zu erzeugen,
**dadurch gekennzeichnet, dass** mindestens ein Flügel (40, 60) aus einem wärmeleitenden Material hergestellt ist, wobei der Körper (32) der Welle mindestens ein Durchgangsloch (62) zwischen der Magnetmasse (30) und der Ausnehmung (34) für den Durchgang der Luft aufweist, und der oder jeder wärmeleitende Flügel (40, 60) in Kontakt mit der Magnetmasse (30) ist und sich von der Magnetmasse (30) bis in das Innere der Ausnehmung (34) über ein entsprechendes Durchgangsloch (62) erstreckt

2. Rotor (16) nach Anspruch 1, bei dem der oder jeder Flügel (40, 60) sich radial im Inneren der Ausnehmung (34) erstreckt.

3. Rotor (16) nach Anspruch 1 oder 2, bei dem mindestens ein Flügel (40, 60) sich gemäß einer radialen Achse senkrecht zur Längsachse über mindestens die Hälfte eines Durchmessers (D) der Ausnehmung (34) für den Durchgang der Luft gemäß dieser radialen Achse, vorzugsweise über den gesamten Durchmesser (D) der Ausnehmung (34) für den Durchgang der Luft erstreckt.

4. Rotor (16) nach einem beliebigen der vorhergehenden Ansprüche, bei dem der oder jeder Flügel (40, 60) fest mit dem Körper (32) der Welle verbunden ist.

5. Rotor (16) nach einem beliebigen der vorhergehenden Ansprüche, bei dem der oder jeder Flügel (40, 60) mit einer Ebene senkrecht zur Längsachse (X) einen Winkel mit einem Wert zwischen 0 und 90°, vorzugsweise im Wesentlichen gleich 10° bildet.

6. Rotor (16) nach einem beliebigen der vorhergehenden Ansprüche bei dem das wärmeleitende Material ausgewählt ist aus der Gruppe, die besteht aus: einem Metall, wie Kupfer oder Aluminium, einer Aluminiumoxidkeramik, einer Siliziumcarbidkeramik, einer Siliziumoxidkeramik und einer Kohlenstoffverbindung.

7. Rotor (16) nach einem der vorhergehenden Ansprüche, bei dem der Rotor (16) eine maximale Drehgeschwindigkeit um die Längsachse (X) eines Werts größer als 10.000 Umdrehungen/min, vorzugsweise größer als 15.000 Umdrehungen/min, noch bevorzugter größer als 20.000 Umdrehungen/min, noch bevorzugter im Wesentlichen gleich 28.000 Umdrehungen/min aufweist.

8. Elektrischen Maschine (10), die ein Gehäuse (12), einen Stator (14), der im Inneren des Gehäuses (12) angeordnet ist, und einen Rotor (16) umfasst, **dadurch gekennzeichnet, dass** der Rotor (16) nach einem beliebigen der vorhergehenden Ansprüche ausgebildet ist, wobei die Magnetmasse (30) im Inneren des Gehäuses (12) angeordnet ist und die Welle (28) von zwei mit dem Gehäuse (12) verbundenen Lagern (22) abgestützt ist.

9. Maschine (10) nach Anspruch 8, bei der jede Öffnung (36, 38) außerhalb des Gehäuses (12) mündet, wobei jede Öffnung (36, 38) eine radiale Öffnung oder eine Längsöffnung ist.

10. Maschine (10) nach Anspruch 9, bei der jede Öffnung (36, 38) im Inneren des Gehäuses (12) mündet, wobei jede Öffnung (36, 38) eine radiale Öffnung ist.

## Claims

1. Rotor (16) of an electric machine (10), comprising a shaft (28) which is rotatable about a longitudinal axis (X), and a magnetic mass (30) which is fixed to the shaft (28),
the shaft (28) comprising a body (32) which extends along the longitudinal axis (X), the body (32) having an air flow cavity (34), at least one air inlet orifice (36) for admitting air from outside the shaft (28) to the cavity (34), and at least one air outlet orifice (38) for discharging air from the cavity (34) to outside the shaft (28), the cavity (34) extending longitudinally over at least part of the length (L) of the body (32) along the longitudinal axis (X),
the shaft (28) further comprising at least one fin (40, 60) extending inside the cavity (34) in order to create, on rotation of the shaft (28), a stream of air which flows in the air flow cavity (34) from the air inlet orifice (36) to the air outlet orifice (38),
**characterised in that** at least one fin (40, 60) is made of a thermally conducting material, the body (32) of the shaft has at least one through-hole (62) between the magnetic mass (30) and the air flow cavity (34), and the or each thermally conducting fin (40, 60) is in contact with the magnetic mass (30) and extends from the magnetic mass (30) to the inside of the cavity (34) *via* a corresponding through-hole (62).

2. Rotor (16) according to claim 1, wherein the or each fin (40, 60) extends radially inside the cavity (34).

3. Rotor (16) according to claim 1 or 2, wherein at least one fin (40, 60) extends, along a radial axis perpendicular to the longitudinal axis, over at least half of a diameter (D), along said radial axis, of the air flow cavity (34), preferably over substantially all of the diameter (D) of the air flow cavity (34).

4. Rotor (16) according to any one of the preceding claims, wherein the or each fin (40, 60) is attached to the body (32) of the shaft.

5. Rotor (16) according to any one of the preceding claims, wherein the or each fin (40, 60) forms, with a plane perpendicular to the longitudinal axis (X), an angle having a value of between 0 and 90°, preferably substantially equal to 10°.

6. Rotor (16) according to any one of the preceding claims, wherein the thermally conducting material is chosen from the group consisting of: a metal, such as copper or aluminium, a ceramic material based on alumina, silicon carbide, silica and a carbon-containing compound.

7. Rotor (16) according to any one of the preceding claims, wherein the rotor (16) has a maximum speed of rotation about the longitudinal axis (X) having a value greater than 10,000 revolutions per minute, preferably greater than 15,000 revolutions per minute, more preferably greater than 20,000 revolutions per minute, more preferably substantially equal to 28,000 revolutions per minute.

8. Electric machine (10), comprising a body (12), a stator (14) arranged inside the body (12), and a rotor (16), **characterised in that** the rotor (16) is in accordance with any one of the preceding claims, the magnetic mass (30) being arranged inside the body (12) and the shaft (28) being carried by two bearings (22) attached to the body (12).

9. Machine (10) according to claim 8, wherein each orifice (36, 38) opens outside the body (12), each orifice (36, 38) being a radial orifice or a longitudinal orifice.

10. Machine (10) according to claim 9, wherein each orifice (36, 38) opens inside the body (12), each orifice (36, 38) being a radial orifice.
